Europäisches Patentamt

European Patent Office

Office européen des brevets

(11) Publication number: **0 036 461**
**A1**

# EUROPEAN PATENT APPLICATION

(21) Application number: **80300922.4**

(22) Date of filing: **25.03.80**

(51) Int. Cl.³: **G 05 B 19/23**

(43) Date of publication of application: **30.09.81**
**Bulletin 81/39**

(84) Designated Contracting States: **AT BE CH DE FR GB IT LU NL SE**

(71) Applicant: **FUJITSU FANUC LIMITED, 5-1, Asahigaoka, 3-chome, Hino-shi, Tokyo 191 (JP)**

(72) Inventor: **Fukuyama, Hiroomi, No. 719-644, Yano-cho, Hachioji-shi Tokyo (JP)**
Inventor: **Isobe, Shinichi, No. 4-25-1, Wakaba-cho Tachikawa-shi, Wakabacho-danchi, 25-301, Tokyo (JP)**

(74) Representative: **Bedggood, Guy Stuart et al, Haseltine Lake & Co. Hazlitt House 28 Southampton Buildings Chancery Lane, London WC2A 1AT (GB)**

(54) **Tool compensation apparatus, and a method of correcting for tool wear.**

(57) In a numerical-controlled machine tool a controlled object (e.g. tool TL1) is positioned in dependence upon a command value as modified by a tool compensation value.

A command value is held in a register CR and a compensation value is held in a register CPR. The command and compensation values are algebraically added by an arithmetic circuit ART2 and the result is used to position the tool TL1. The number of times the tool is used is counted in a counter UT and when that number equals a preset count value n1 held in register CTR (coincident unit CIN detects equality), a correction amount ($\triangle$T1) is added to the content of register CPR by arithmetic unit ART3, to provide a new compensation value in register CPR taking into account tool wear.

0036461

-1-

TOOL     COMPENSATION APPARATUS AND A METHOD
OF CORRECTING   FOR TOOL WEAR.

This invention relates to tool      compensation
apparatus and a method of correcting   for tool wear.

Previously, a tool compensation value, relating to a
particular tool, for tool wear in a numerical control
machine tool, has been determined by an operator
measuring the size of an actually cut workpiece or by
means of a measuring instrument mounted on the machine
tool.

Compensation data relating to such tool compensation
values thus determined has been entered by an operator
into a numerical controller of the machine tool, or
such compensation data as obtained by the measuring
instrument has been entered into the numerical
controller via a special interface.  Accordingly,
the first method has required an operator to carry out
an appropriate measurement at a proper time and hence
has been troublesome, whereas the second method has involved the use of a measuring instrument and an interface,
thereby increasing cost.  Thus, these previous methods
have suffered from disadvantages and there is today a
demand for a means of providing automatic tool compensation
without substantial cost increase.

According to one aspect of the present invention
there is provided tool wear compensation apparatus, having
a command value register for storing a command value,
and a compensation value register for storing a compensation
value, adapted so that an object the position of which is controlled takes up a position corresponding to the command value as modified by the compensation value, characterised by:-

means for maintaining a value indicative of the amount of use of a tool, and

means for correcting the compensation value stored in the compensation value register by a preset amount when the value indicative of the amount of use of the tool reaches a predetermined limit, thereby to take into account wear of the tool.

According to another aspect of the present invention there is provided a method of compensating for tool wear, comprising:-

storing a command value, and

storing a compensation value,

positioning an object the position of which is controlled in dependence upon the command value as modified by the compensation value, and characterised by:-

maintaining a value indicative of the amount of use of a tool, and

correcting the compensation value by a preset amount when the value indicative of the amount of use of the tool reaches a predetermined limit, thereby to take into account wear of the tool.

An embodiment of the present invention provides a tool compensation system which permits automatic correction of tool compensation data without the necessity of an automatic measuring instrument and an interface.

Briefly stated, embodiments of this invention, provide that tool compensation data is automatically corrected by                a preset value whenever the number of times a tool has been used, or alternatively whenever the duration of time for which a tool has been used, exceeds a predetermined value.

Reference is made, by way of example, to the accompanying drawings, in which:-

Fig. 1 is a schematic diagram for assistance in explanation of turning operations to which a workpiece is subjected; and

Figs. 2, 3 and 4 are respective block diagrams showing principal parts of respective apparatuses embodying the present invention.

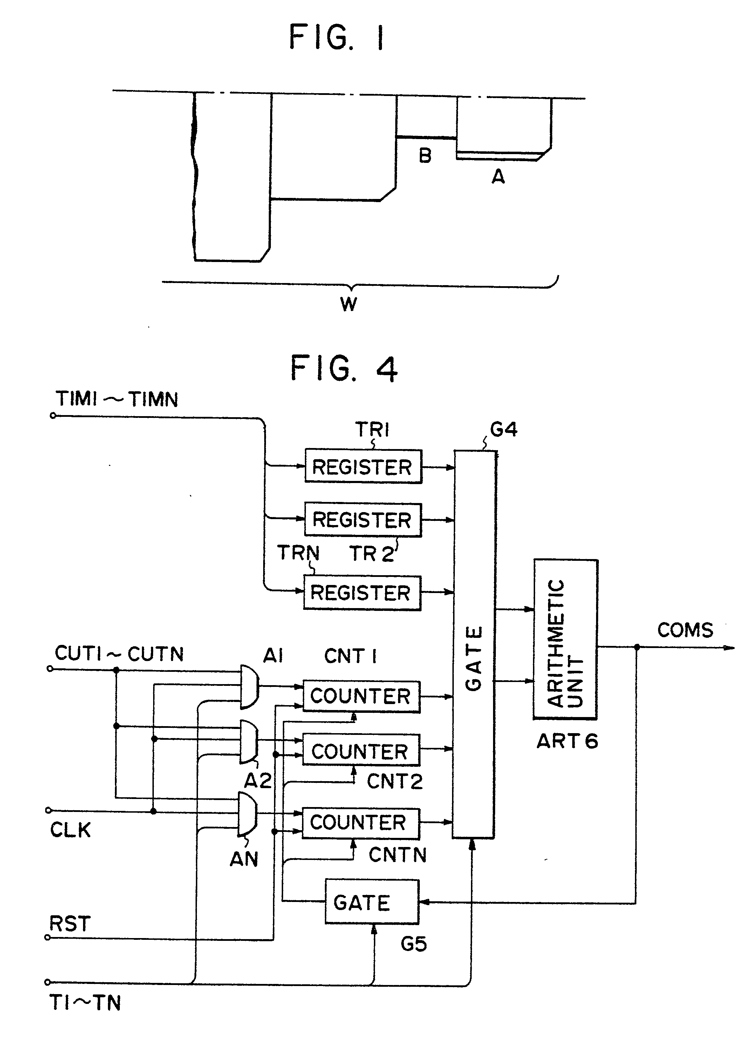

In ordinary working, several tools are employed in accordance with particular parts of a workpiece to be machined. For example, in the cutting of such a workpiece as is shown in Fig. 1, there are required, in addition to rough and finish machining tools, various tools for machining respective parts of the workpiece, such as a screw cutting tool for a part A, a cutting-off tool for a part B, etc. The amounts of wear of the respective tools usually differ from one another. These amounts of wear can be discovered from the nature of the tools themselves and the quality of material of the workpiece. Accordingly, it is possible to preset data, for example, for increasing the amount of compensation effective for the tool used for machining the part A by $\Delta T1$ after n1 machining operations, for increasing the amount of tool compensation for the tool used for machining the part B by $\Delta T2$ after n2 machining operations, etc. In the present invention, such data is prestored in a memory of numerical control equipment or entered as input instructions to automatically modify the compensation data in response to the wear of each tool.

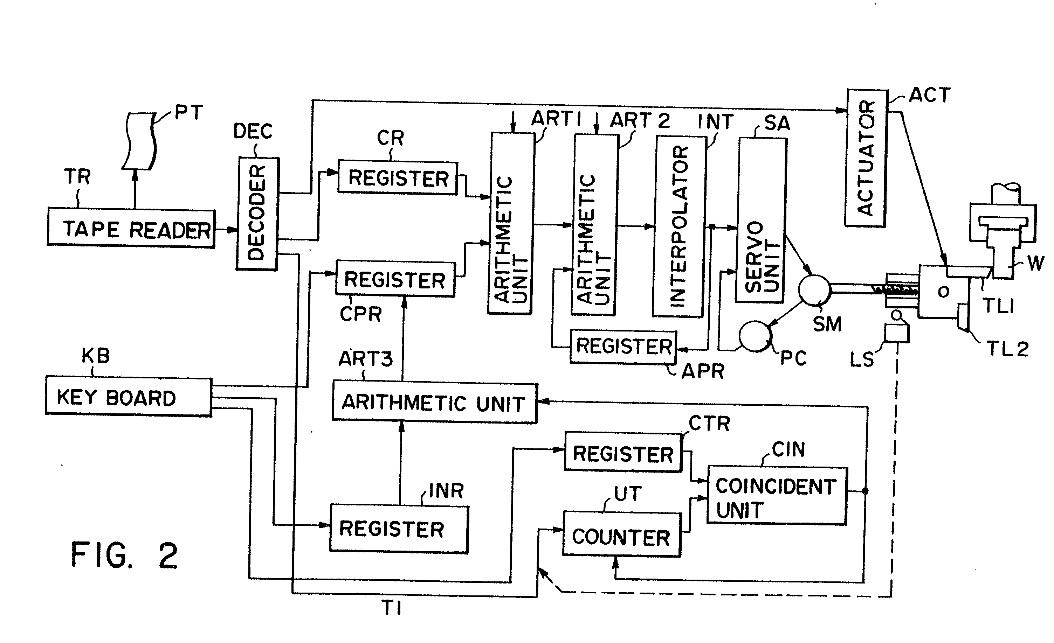

Fig. 2 illustrates in a block form an example of apparatus, in a numerical-controlled machine tool, embodying the present invention. In Fig. 2, PT is a command tape having recorded thereon data for determining the amounts of movement of tools, command data such as tool select instruction and so forth; TR is a tape reader; DEC is a decoder; CR is a command value register; KB is a keyboard; CPR is a compensation value register; ART1 to ART3 are arithmetic circuits; APR is a current value register; INT is an interpolator; SA is a servo circuit; SM is a servo motor; PC is a pulse coder; ACT is an actuator for use in tool changing; TL1 and TL2 are tools; W is a workpiece; INR is a compensation data storing register; UT is a counter for counting the frequency of use of a tool; CTR is a register for setting the number of times of the use of a tool; and CIN is a coincidence circuit.

In Fig. 2, in response to a tool select command (for example, T1) from the command tape PT the tool changing actuator ACT operates to select the tool TL1, and compensation data corresponding to the tool TL1 is preset in the register CPR from the keyboard KB. A movement command value from the command tape PT is set in the register CR via the tapereader TR and the decoder DEC and, for compensation, the compensation data is algebraically added by the arithmetic circuit ART1 to the command value. The resulting compensation command value is algebraically added by the arithmetic circuit ART2 to the content of the register APR, and the difference between the compensation command value and the content of APR is provided to the interpolator INT to effect positioning of the tool TL1. For repetitive working standardized previously, the wear $\Delta$ T1 of the tool TL1 after use n1 times is obtained in advance. These data values n1 and $\Delta$T1 are entered from the keyboard KB and stored in the registers CTR and INR respectively. Upon each occurrence of a select command T1 for the tool TL1 from the command tape PT, the command is counted by the counter UT. Accordingly, when the tool TL1 has been selected and used n1 times, this is detected by the coincidence circuit CIN, and the content $\Delta$ T1 of the register INR is added via the arithmetic circuit ART3 to the content of the register CPR, thereby correcting the compensating data. The counter UT is reset by a coincidence signal and thereafter counts tool select commands again, whereby operation as described above is repeated and the compensation data is corrected by correction data $\Delta$ T1 each time the tool TL1 has been used a further n1 times. As the input to the counter UT, use can also be made of a signal available from a limit switch LS which is activated by the arrival of the movable machine part at a predetermined reference point (for example, the point of termination of one machining operation).

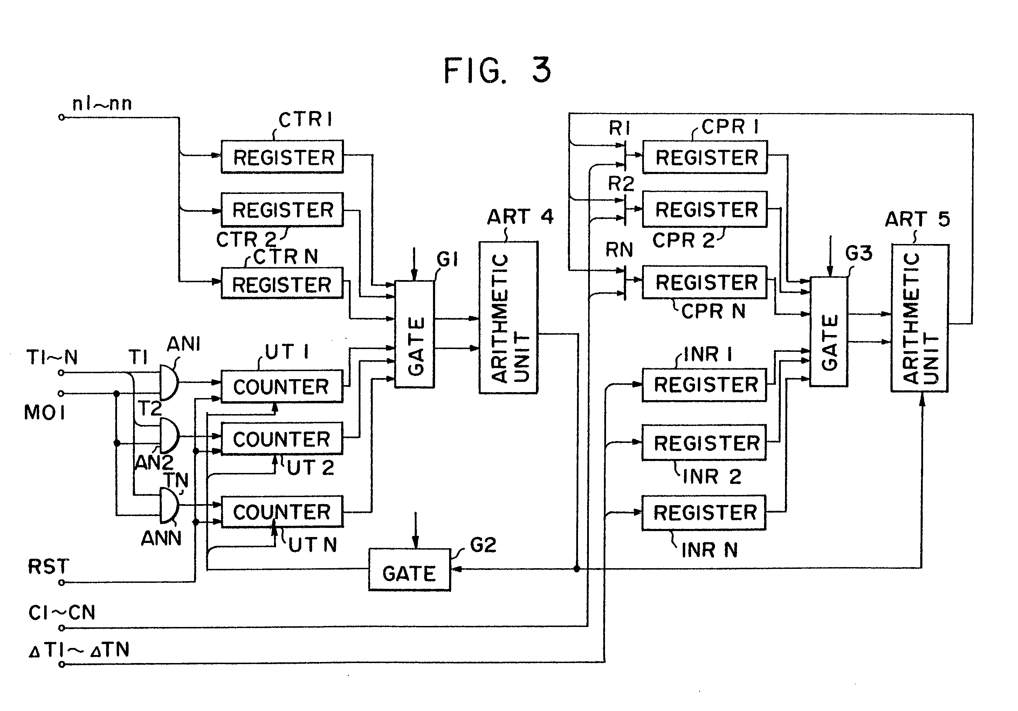

Fig. 3 is a block diagram showing another example of apparatus embodying the present invention. In Fig. 3, CPR1 to CPRN are compensation value registers; INR1 to INRN are compensation data registers; UT1 to UTN are counters for counting the frequency of use of respective tools; CTR1 to CTRN are registers for setting the frequency of use of respective tools; AN1 to ANN are AND circuits; G1 to G3 are gates; and ART4 and ART5 are arithmetic circuits.

In Fig. 3, RST is an initial reset signal; $\underline{n}1$ to $\underline{nn}$ are respective set values for the frequencies of use (the number of times of use) of respective tools; C1 toCN are respective compensation values for the respective tools; and $\triangle T1$ to $\triangle TN$ denote respective correction values for the respective tools. Such data is entered in advance from the keyboard and set in registers corresponding to the respective tools.

In Fig. 3, respective pluralities of registers and counters are provided for each respective one of a plurality of tools. As inputs to the counters UT1 to UTN, use is made of the respective logical products of respective tool select commands T1 to TN and an auxiliary code MO1 similarly prerecorded on the command tape.

The gate G1 reads out the contents of corresponding ones of the registers CTR1 to CTRN and the counters UT1 to UTN into the arithmetic circuit ART4 in a repeating cyclic order with a predetermined period. When coincidence of the contents is detected by the arithmetic circuit ART4, the corresponding one of the counters UT1 to UTN is reset and, at the same time, the content of that one of the registers INR1 corresponding to the tool in respect of which coincidence was detected by the arithmetic circuit ART5, is added to the corresponding one of the registers CPR1 to CPRN.

Fig. 4 shows in block form another example of the present invention, in which respective counters CNT1 to CNTN receive, as input signals, the logical products of respective tool select commands T1 to TN, respective cutting commands CUT1 to CUTN and a reference pulse CLK via AND circuits A1 to AN. Accordingly, in the example of Fig. 4, the contents of the respective counters CNT1 to CNTN represent the respective durations of use of the respective corresponding tools, and these counter contents and values preset in the registers TR1 to TRN are compared.

Namely, the value set in the registers TR1 to TRN and the contents of the counters CNT1 to CNTN are compared by an arithmetic circuit ART6 via a gate G4. Upon detection of coincidence, a compensation value register content correction command COMS is obtained and the content of the corresponding counter is reset via a gate G5.

The present invention can provide for inexpensive tool compensation equipment which permits automatic correction of a tool compensation value without the necessity of a measuring instrument and a special interface circuit.

In the machining of a workpiece by a numerical-controlled machine tool, there are needed command values which determine the configuration of a finished product and compensation values which depend on the tool to be used. Tool compensation data values must be corrected in response to wear of the tool. In an embodiment of the present invention, taking notice of the fact that correction data corresponding to wear of the tool can be predetermined from the frequency (number of times used) or time (duration) of use of the tool and the amount of its wear which can be unequivocally determined by the quality of materials of the tool and of a workpiece, counter means are provided for counting the frequency or time of use of the tool and means is provided for correcting by a predetermined value the content of a compensation value register, holding tool compensation data, when the count content of the counter means has reached a predetermined value.

CLAIMS

1.    Tool      compensation apparatus, having a command value register for storing a command value, and a compensation value register for storing a compensation value, adapted so that an object the position of which is controlled takes up a position corresponding to the command value as modified by the compensation value, characterised by:-

means for maintaining a value indicative of the amount of use of a tool, and

means for correcting the compensation value stored in the compensation value register by a preset amount when the value indicative of the amount of use of the tool reaches a predetermined limit, thereby to take into account wear of the tool.

2.    Apparatus as claimed in claim 1, wherein the value indicative of the amount of use of a tool is a count of the number of times the tool has been used.

3.    Apparatus as claimed in claim 1, wherein the value indicative of the amount of use of a tool is a measure of the duration of time for which the tool has been used.

4.    A method of correcting    for tool wear, comprising:-

storing a command value, and

storing a compensation value,

positioning an object the position of which is controlled in dependence upon the command value as modified by the compensation value, and characterised by:-

maintaining a value indicative of the amount of use of a tool, and

correcting the compensation value by a preset amount when the value indicative of the amount of use of the tool reaches a predetermined limit, thereby to take into account wear of the tool.

5.    A method as claimed in claim 4, wherein the value indicative of the amount of use of a tool is a count of

0036461

the number of times the tool has been used.

6.    A method as claimed in claim 4, wherein the value indicative of the amount of use of a tool is a measure of the duration of time for which the tool has been used.

7.    A numerical-controlled machine tool including apparatus as claimed in any of claims 1 to 3.

0036461

1/3

FIG. 1

W

FIG. 4

TIMI ~ TIMN

TRI    G4
REGISTER

REGISTER

TRN    TR 2
REGISTER

CUTI ~ CUTN    AI    CNT I
COUNTER

COUNTER

A2    CNT2

COUNTER

AN    CNTN

CLK

GATE    ARITHMETIC UNIT    COMS

ART 6

RST

GATE

G5

TI~TN

FIG. 2

# FIG. 3

0036461
Application number

EP 80 30 0922

## European Patent Office
## EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 4 186 529 (S.E. HUFFMAN)<br>* Column 14, line 23 - column 15, line 59 * | 1,2,4,5,7 | G 05 B 19/22 |
| | US - A - 4 133 233 (D.R. PEARL, GERBER GARMENT TECHNOLOGY)<br>* Column 2, lines 10-44; column 5, line 56 - column 9, line 8; figures 5,6 * | 1,2,4,5,7 | |
| | DE - A - 2 827 711 (OKI ELECTRIC INDUSTRY)<br>* Page 2, claim 4 * | 3,6 | **TECHNICAL FIELDS SEARCHED (Int. Cl.³)**<br><br>G 05 B 19/22<br>19/20<br>19/18<br>19/26<br>19/28 |

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 11-12-1980 | CORNILLIE |

EPO Form 1503.1  06.78